# EUROPEAN PATENT APPLICATION

(11) **EP 1 669 943 A1**
(43) Date of publication of application: **14.06.2006**
(21) Application number: 05252718.1
(22) Date of filing: 29.04.2005
(51) Int. Cl.: G07C 9/00, G07F 7/10

(54) **Automated transaction control method, automated transaction device, and storage medium storing a program for the same**

(30) Priority: 10.12.2004 JP 2004357488
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Chigira, Kenichi, c/o Fujitsu Terminal Systems Ltd, Maebashi-shi, Gunma 371-0855 (JP); Izawa, Shuuichi, c/o Fujitsu Terminal Systems Ltd., Maebashi-shi, Gunma 371-0855 (JP); Narita, Yuuichi, c/o Fujitsu Terminal Systems Ltd., Maebashi-shi, Gunma 371-0855 (JP); Kudou, Takahiro, c/o Fujitsu Terminal Systems Ltd., Maebashi-shi, Gunma 371-0855 (JP); Awatsu, Kiyotaka, c/o Fujitsu Frontech Limited, Inagi-shi, Tokyo 206-8555 (JP); Fujiwara, Masako, c/o Fujitsu Frontech Limited, Inagi-shi, Tokyo 206-8555 (JP); Okamura, Sagiri, c/o Fujitsu Frontech Limited, Inagi-shi, Tokyo 206-8555 (JP)
(74) Representative: Stebbing, Timothy Charles

(57) **Abstract**

An automated transaction device (6) verifies individual data on a storage medium (5) against inputted individual data and performs automated transactions. The automated transaction device (6) has biometric authentication functions realized in a biometric unit (1-1). A control unit (67) of the device detects abnormalities in the biometric unit (1-1) at the start of a transaction, and upon detecting an error, effects a transition to a conventional transaction based on password authentication using an IC card (5). Even when an abnormality occurs in the biometric unit (1-1), a transaction based on conventional authentication is possible.

## Description

This invention relates to an automated transaction control method, an automated transaction device and a program, to verify input data obtained from a user against individual data on a storage medium held by the user in order to perform automated transaction, and in particular relates to such a method, device and program, which utilize a biometric authentication unit to read biometric information for the user, and verify the information against registered biometric information.

Automated transaction machines which are operated by users are in wide use. Such automated transaction machines include automated cash dispensers, automated deposit/withdrawal machines, and automated balance transfer machines for financial transactions, as well as automated ticket dispensers and automated certification document dispensers.

Such automated transaction machines are operated by users to perform deposit/withdrawal, cash transfer, document issuing, and other transactions. Hence from the standpoint of prevention of illicit operations, it is essential that such automated transaction machines perform individual authentication of users. In the individual authentication methods of the automated transaction device used in the prior art, a card on which is recorded individual information is issued, and when performing an automated transaction, a card password number or other individual data is read from the card and is compared with a password number inputted by the user.

Such password-based individual authentication methods, which are specific to users, entail the use of simple strings of numbers which can now be easily analysed through advances in computer technology, and so from the standpoint of preventing illicit operations have become unsatisfactory. Hence various biometric-based authentication technologies utilizing biometric characteristics have been proposed for use in an automated transaction to verify a user's identity.

The human body has numerous portions enabling identification of the individual, such as fingerprints, the retinas of the eyes, facial characteristics, and blood vessels. Advances in biometrics technology in recent years have led to the proposal of various devices for identification of such biometric characteristics which are one portion of the human body, to perform an automated transaction (see Japanese Patent Laid-open No. 2003-256912) .

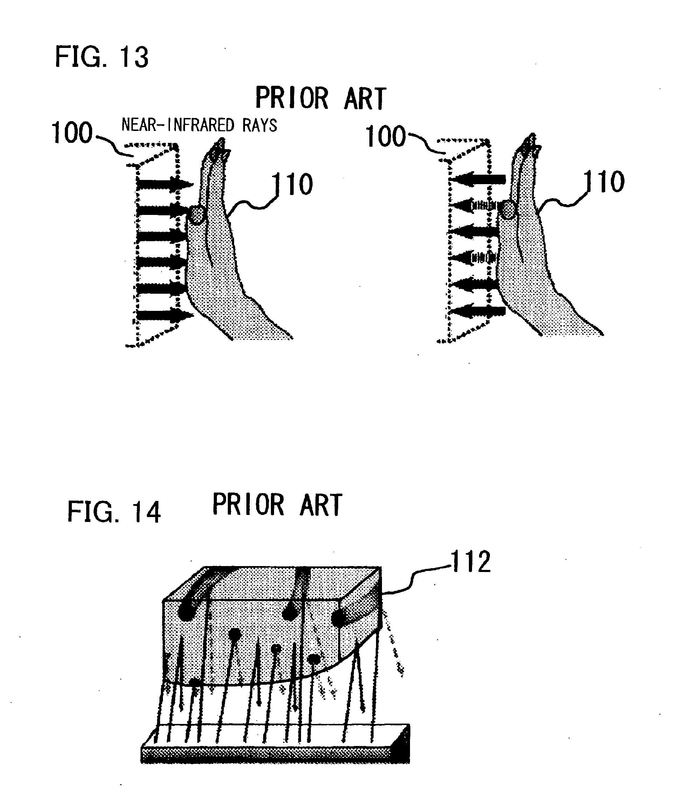

For example, blood vessel patterns in the palms and fingers or palm-prints contain a comparatively large amount of individual characteristic data, and so are appropriate to ensure reliability of individual authentication. In particular, blood vessel (vein) patterns remain unchanged throughout life from infancy, and are regarded as being completely unique, and so are well-suited to individual authentication. Figs. 13 to 16 explain conventional palm authentication techniques. As shown in Fig. 13, at the time of registration or authentication, a user places the palm of his hand 110 into proximity with an image capture device 100. The image capture device 100 emits near-infrared rays, which are incident on the palm of the hand 110. The image capture device 100 uses a sensor to capture near-infrared rays rebounding from the palm of the hand 110.

As shown in Fig. 14, hemoglobin in the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the intensity of the reflected near-infrared rays can be used to identify the positions of veins.

As shown in Fig. 13, the user first uses the image capture device 100 of Fig. 13 to register vein image data of the palm of his own hand in a server or on a card. Then, in order to perform an automated transaction, the user employs the image capture device 100 of Fig. 13 to read the vein image data of his own hand.

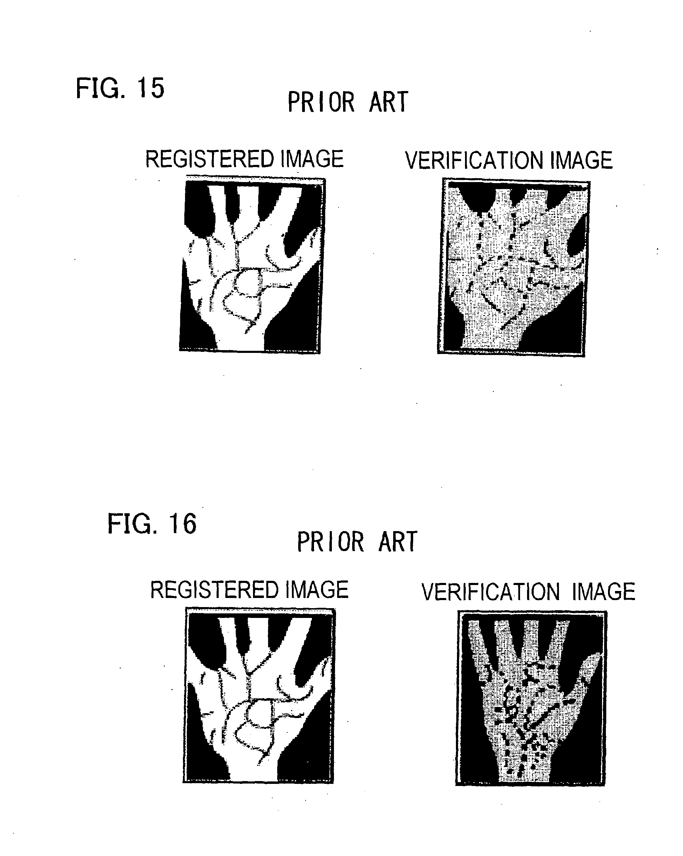

Authentication (verification) is performed by comparing the patterns of veins in the registered vein image retrieved using the user's ID recorded on a card and in the vein verification image thus read. For example, on comparing the vein patterns in the registered image and a verification image as in Fig. 15, the individual is authenticated as the individual in question. On the other hand, upon comparison of the vein patterns in a registered image and in a verification image as in Fig. 16, the individual is not authenticated (see for example Japanese Patent Laid-open No. 2004-062826).

As such an automated transaction device, a biometric unit which captures an image of a human face when installed has been proposed using the following method, (see for example Japanese Patent Laid-open No. 2003-256912). That is, a combination of a biometric authentication and a password authentication is adopted. And when verification of an individual is not successful using the biometric authentication and when verification of the individual is not successful using the password authentication, even if authentication is repeated a plurality of times, a transaction process is interrupted.

Since the biometric unit is attached to the automated transaction device and captures an image of a living body and extracts characteristic data of the living body at the start of a transaction, correct operation of the unit is required. That is, because the automated transaction device is operated by a user himself, when the biometric unit does not operate correctly, the user who does not know the workings of the unit is unable to understand the problem. Thus, trouble is caused because the user is unable to proceed with the transaction.

Furthermore, in a biometric authentication device of which a high accuracy authentication is necessary or is a sales point, if the above trouble occurs, the user feels that it is not convenient to use biometric authentication. Accordingly, the widespread introduction of automated transaction machines utilising biometric authentication is impeded.

It is therefore desirable to provide an automated transaction control method, an automated transaction device, and program for implementing the method, to improve the service for a user provided by the automated transaction device having a biometric authentication function.

It is further desirable to provide an automated transaction control method, an automated transaction device, and a storage medium storing a program for implementing the method, to improve the service for the user even when the biometric authentication operates abnormally.

It is still further desirable to provide an automated transaction control method, an automated transaction device, and program for implementing the method, to provide a transaction service to an automated transaction device installed with biometric authentication functions by another authentication in addition to the biometric authentication.

A first aspect of the invention provides an automated transaction device operable to read individual data from a storage medium of a user, verify the read data against input individual data, and perform automated transactions. The automated transaction device has a media reading unit for reading the storage medium of said user; a biometric unit for verifying registered biometric characteristic data of the individual identified by the storage medium against detected biometric characteristic data detected from a body part of the user, and performing individual authentication; and a control unit for performing automated transactions according to the authentication result of the biometric unit. And the control unit is operable to perform non-biometric authentication in which non-biometric individual data stored in the storage medium is verified against inputted non-biometric individual data, and to execute an automated transaction, when abnormality of the biometric unit is detected at a start of an automated transaction.

An automated transaction control method of a second aspect of the invention has steps of: detecting whether a biometric unit is operating abnormally or not; verifying biometric characteristic data already registered by the user against biometric characteristic data detected from a body part of the user using the biometric unit, and performing biometric authentication, when the biometric unit is operating normally; executing an automated transaction based on the biometric authentication when the result of said biometric authentication is satisfactory; and verifying non-biometric individual data of the storage medium against inputted non-biometric individual data, performing non-biometric authentication as individual authentication, and executing an automated transaction, when the biometric unit is operating abnormally.

A third aspect of the invention provides a program (which may be stored on a computer readable storage medium) which causes a computer to execute the steps of: detecting whether a biometric unit is abnormal or not; verifying biometric characteristic data registered by a user against biometric characteristic data detected from a body part of the user using the biometric unit, and performing biometric authentication, when the biometric unit is normal; executing an automated transaction based on the biometric authentication when the result of the biometric authentication is satisfactory; and verifying non-biometric individual data on the storage medium against inputted non-biometric individual data, performing non-biometric authentication for individual authentication, and executing an automated transaction, when the biometric unit is abnormal.

In the first aspect, it is preferable that the control unit causes conditions of a transaction based on the biometric authentication to be different from conditions of a transaction based on non-biometric authentication (in which verification against the non-biometric individual data is performed).

It is also preferable that the control unit counts the number of transactions during abnormality of the biometric unit, and transits to the non-biometric authentication when the number of transactions during abnormality either exceeds a preset number or equals a preset number.

It is further preferable that the control unit clears (resets to zero) the counted number of transactions during abnormality when the biometric unit returns to a normal state.

It is still further preferable that the control unit urges the user to perform a transaction on another automated transaction device installed with the biometric authentication function by means of a guidance screen of the automated transaction device, when the number of transactions during abnormality exceeds (or equals) the preset number.

Furthermore, it is preferable that the control unit causes a withdrawal amount limit for a transaction based on the biometric authentication to be different from a withdrawal amount limit for a transaction based on non-biometric authentication (in which verification of the non-biometric individual data is performed).

Also, it is preferable that the control unit limits a range of allowable transactions based on the non-biometric authentication to less than the range of allowable transactions based on the biometric authentication.

It is preferable that the biometric unit has an image capture device for capturing an image of said body part and an authentication unit for extracting the biometric characteristic data from the captured image, verifying the extracted biometric characteristic data against the registered biometric characteristic data on the storage medium, and performing individual authentication.

In addition, it is preferable that the control unit has a middleware program which starts the biometric unit, detects abnormality of the biometric unit by monitoring a response result from the biometric unit, and executes the non-biometric authentication when an abnormality is detected, and a transaction processing program which controls an automated transaction mechanism to perform automated transaction operations according to the authentication result.

The biometric characteristic data already registered for the user may be stored on the storage medium carried by the user, or stored on a server.

Reference is now made, by way of example only, to the accompanying drawings, in which:
Fig. 1 shows the configuration of an automated transaction system of one embodiment of the invention;
Fig. 2 is a perspective view of the ATM of Fig. 1;
Fig. 3 is a block diagram of the ATM of Fig. 1;
Fig. 4 is a functional block diagram of the biological information verification processing of Fig. 3;
Fig. 5 is a side view showing the relation between the sensor of Fig. 4 and the palm of the hand;
Fig. 6 explains the blood vessel image of Fig. 4;
Fig. 7 explains the blood vessel image data of Fig. 4;
Fig. 8 shows the program configuration of the control unit in one embodiment of the invention;
Fig. 9 is a transaction processing flow diagram of a first embodiment of the program configuration of Fig. 8;
Fig. 10 shows the flow of maintenance and inspection processing related to the transaction processing of Fig. 9;
Fig. 11 shows the flow of transaction processing in a second embodiment employing the program configuration of Fig. 8;
Fig. 12 shows the flow of transaction processing in a third embodiment employing the program configuration of Fig. 8;
Fig. 13 explains a conventional palm image capture device;
Fig. 14 explains the principle of a conventional palm image capture device;
Fig. 15 shows explanation diagram of conventional palm authentication technology; and
Fig. 16 shows another explanation diagram of conventional palm authentication technology.

Below, embodiments of the invention are explained, in the order of an automated transaction system, biometric authentication processing, a first embodiment of an automated transaction control method, a second embodiment of an automated transaction control method, a third embodiment of an automated transaction control method, and other embodiments.

### Automated Transaction System

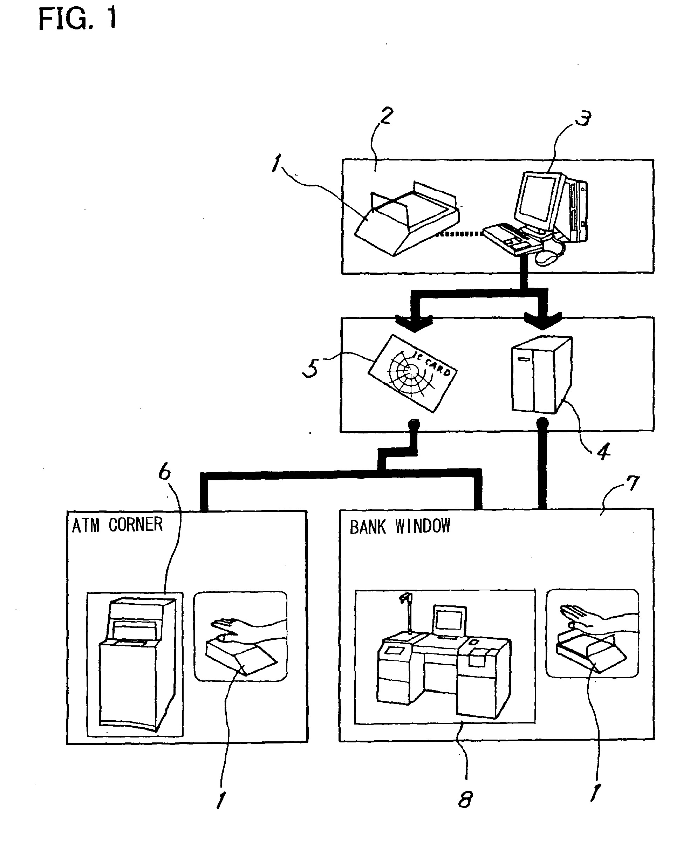

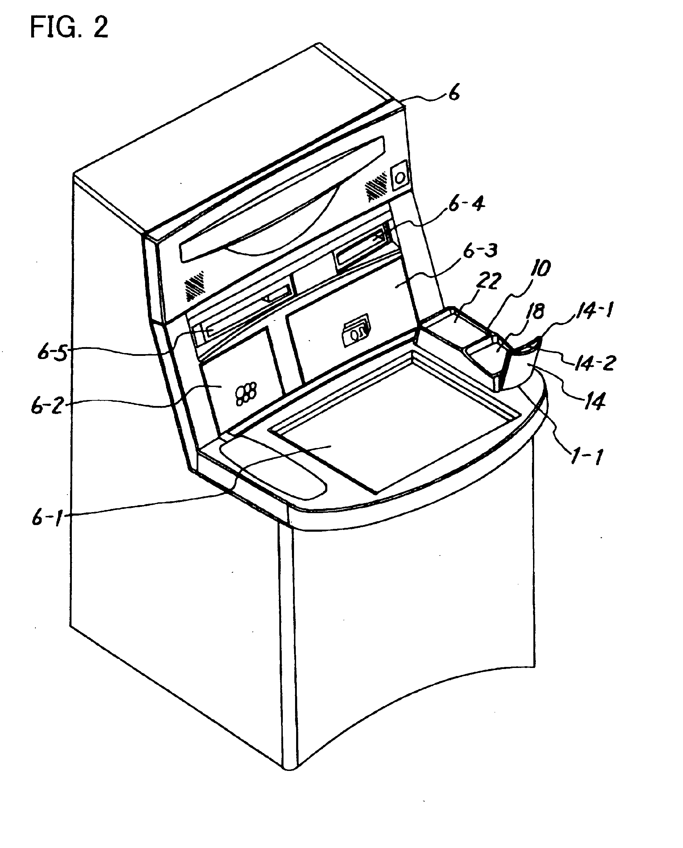

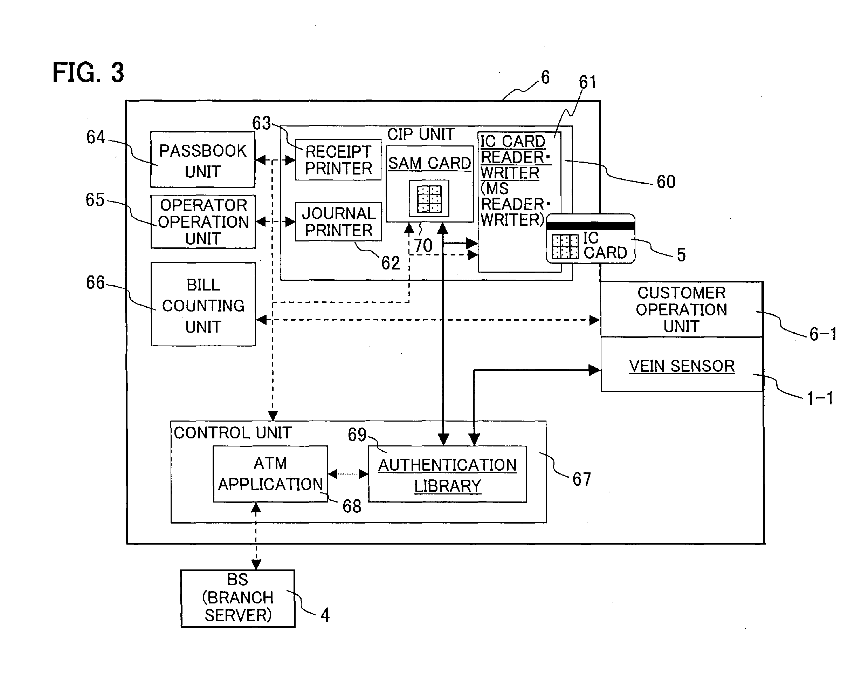

Fig. 1 shows the configuration of an automated transaction system of one embodiment of the invention, Fig. 2 is an external view of the automated transaction device of Fig. 1, and Fig. 3 shows the configuration of the automated transaction device of Fig. 2.

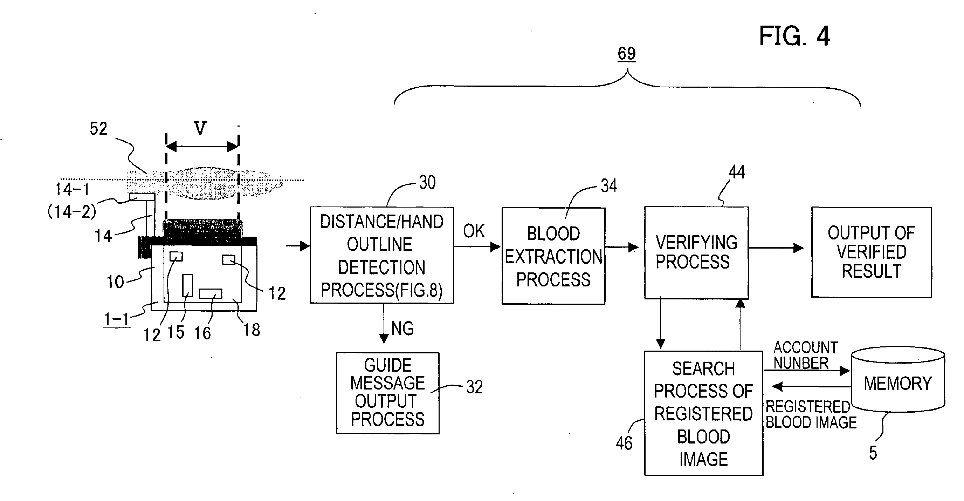

Fig. 1 shows an automated deposit/withdrawal system of a financial institution as the automated transaction system; as the biometric authentication device, an example of a palm vein authentication device is shown. In the service area 2 of the financial institution are provided the palm image capture device 1 explained in Fig. 4 and a branch office terminal (for example, a personal computer) 3 connected thereto. A user requesting vein pattern registration places his hand over the palm image capture device (hereafter the "image capture device") 1. The image capture device 1 reads the palm, and blood vessel image extraction processing is performed by the terminal 3 to extract the vein pattern, which is registered as vein data in the terminal 3.

This vein data is stored in a storage portion 4a of a database server 4 connected to the terminal 3, or in an individual card (for example, an IC card) 5 carried by the user. The server 4 is connected to a service area terminal 8 in the service area 7 of the financial institution, and the service area terminal 8 is connected to the image capture device 1.

The user places his hand over the image capture device 1 provided in the service area 7 in order to perform a financial transaction. The image capture device 1 reads the palm, and the vein pattern is extracted by the blood vessel image extraction processing of the service area terminal 8. The service area terminal 8 verifies the vein pattern as vein data against the vein data registered in the database server 4 (or IC card 5) by means of the **verification** processing, and authenticates the individual.

The server 4 is connected to an ATM (automated cash deposit/withdrawal machine) 6 of the financial institution; the ATM 6 can be used in transactions based on vein authentication. In order to make a withdrawal or perform some other financial transaction using the ATM 6, the user holds his hand over the image capture device 1-1 provided in the ATM 6. The image capture device 1-1 reads the palm of the hand. Similarly to the service area terminal 8, the ATM 6 extracts the vein pattern (blood vessel image), and verifies this as vein data against the vein data registered in the IC card 5 carried by the user (or present in the database server 4), to authenticate the individual.

Fig. 2 and Fig. 3 show the configuration of the ATM (automated transaction machine) 6 of Fig. 1. As shown in Fig. 2, the ATM 6 has, on the front face thereof, a card insertion/ejection aperture 6-4; a bankbook insertion/ejection aperture 6-5; a paper currency insertion/dispensing aperture 6-3; a coin insertion/dispensing aperture 6-2; and a customer operation panel 6-1 for operation and display.

In this example, the image capture device 1-1 is provided on the side of the customer operation panel 6-1. A sensor unit 18 explained in Fig. 4 is mounted on the forward side of the main unit 10 of the image capture device 1-1. On the forward portion (on the user side) of the sensor unit 18 is provided a front guide 14. The front guide 14 comprises a sheet of synthetic resin, transparent or substantially transparent. In order to serve the purposes of guiding the hand of the user over the sensor unit and of supporting the wrist, the cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

Further, the sensor unit 18 of the main unit 10 faces rearward and is inclined upward, and a flat portion 22 is provided therebehind.

As shown in Fig. 3, the ATM 6 has a CIP (Card Reader Printer) unit 60 having a card insertion/ejection aperture 6-4; a bankbook unit 64 having a bankbook insertion/ejection aperture 6-5; a paper currency/coin counter unit 66 having a paper currency insertion/dispensing aperture 6-3 and a coin insertion/dispensing aperture 6-2; an attendant operation unit 65; a control unit 67; a customer operation panel (UOP) 6-1 for operation and display; and an image capture device (vein sensor) 1-1.

The CIP unit 60 has an IC card reader/writer 60 which reads and writes the magnetic stripe and IC chip of an IC card 5; a receipt printer 63 which records transactions on a receipt; and a journal printer 62 which prints the history of transactions on journal forms.

The bankbook unit 64 records transactions on pages of a bankbook, and when necessary turns the pages. The attendant operation portion 65 displays a state of the ATM and performs operations upon occurrence of a fault or during inspection by an attendant. The paper currency/coin counting unit 66 validates, counts, and stores inserted paper currency and coins, and counts and dispenses paper currency and coins in the required quantities.

The control unit 67 communicates with the server 4, and has an ATM application (program) 68 which controls ATM operation and an authentication library (authentication processing program) 69 for biometric authentication processing. A portion of this ATM application 68 acts in concert with the authentication library 69 to control biometric authentication guidance screens of the UOP (customer operation panel) 6-1. The ATM application 68 has a function which compares the password data (individual data) on the magnetic stripe of the IC card 5 with the password data input from the UOP 6-1, to authenticate the individual.

### Biometric Authentication Processing

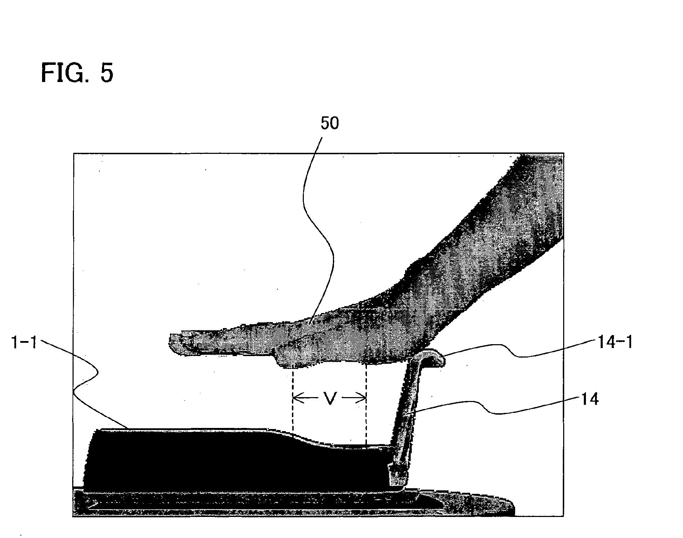

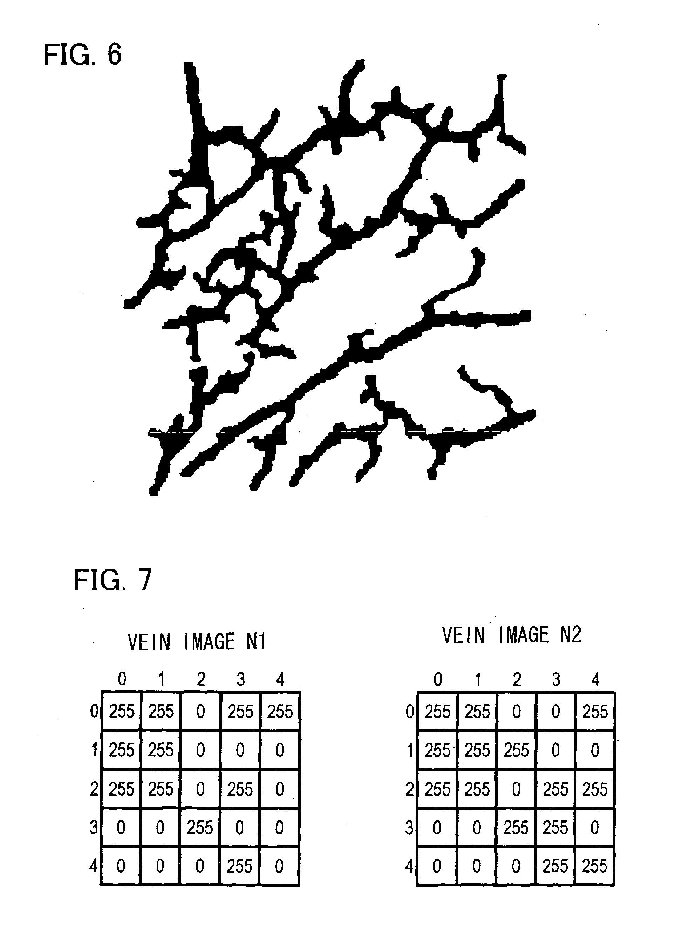

Fig. 4 is a block diagram of the biometric authentication processing of an embodiment of the invention, Fig. 5 is a side view of the image capture device 1-1 of Fig. 4, Fig. 6 explains the detected blood vessel image in Fig. 4, and Fig. 7 explains the verification processing in Fig. 4.

As shown in Fig. 4, the palm image capture device 1-1 of Fig. 1 has the sensor unit 18 mounted substantially in the center of the main unit 10. The front guide 14 is provided in the forward portion (on the user side) of the sensor unit 18. The front guide 14 comprises a sheet of synthetic resin, transparent or substantially transparent.

The front guide 14 serves the purposes of guiding the hand of the user at the front of the unit and of supporting the wrist. Hence the front guide 14 provides guidance to the user to guide and support the wrist above the sensor unit 18. As a result, the attitude of the palm of the hand, that is, the position, inclination, and size over the sensor unit 18 can be controlled. The cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

The sensor unit 18 is provided with an infrared sensor (CMOS sensor) and focusing lens 16 and a distance sensor 15 in the center; on the periphery thereof are provided a plurality of near-infrared light emission elements (LEDs) 12. For example, near-infrared light emission elements 12 are provided at eight places on the periphery, to emit near-infrared rays upwards.

The readable region V of this sensor unit 18 is regulated by the relation between the sensor, focusing lens, and near-infrared light emission region. Hence the position and height of the front guide 14 are set such that the supported wrist is positioned in the readable region V.

As shown in Fig. 5, when the hand 50 is extended with palm flat, the palm has maximum area, and moreover is flat, so that when the palm is subjected to image capture in the image capture region V of the sensor unit 18, an accurate vein pattern which can be used in registration and verification is obtained. As shown in Fig. 5, when the distance from the sensor unit 18 to the palm is within a prescribed range, a sharp and focused image is obtained by the sensor (lens) 16 of the sensor unit 18.

Hence as shown in Fig. 4, when the front guide 14 supports the wrist 52 above the sensor unit 18, the user's hand can be guided and supported so that the position, inclination and height of the palm above the sensor unit 18 are made precise with respect to the image capture range of the sensor unit 18.

Returning to Fig. 4, the authentication library (authentication program) 69 of the control unit 67 of the ATM 6 connected to the image capture device 1 executes a series of verification processing 30 to 46. The control unit 67 of the ATM 6 has, for example, a CPU, various types of memory, interface circuitry, and other circuits necessary for data processing. The CPU executes the series of verification processing 30 to 46.

Distance/hand outline detection processing 30 receives the distance from the image capture device 1-1 measured by the distance sensor 15, judges whether the palm or other object is at a distance within a prescribed range from the sensor unit 18, and detects the outline of the hand from the image captured by the sensor unit 18; and judges whether the image can be used in registration and verification processing based on the detected outline. For example, a judgment is made as to whether the palm appears sufficiently in the image.

Guidance message output processing 32 outputs to the UOP 6-1 of the ATM 6 a message guiding the palm to the left or right, forward or backward, upward or downward, when the distance measured by the distance sensor 15 indicates that the hand is outside the image capture range, and when hand outline detection processing 30 indicates that the image cannot be used in registration and verification processing. By this means, the hand of the user is guided into position over the image capture device 1-1.

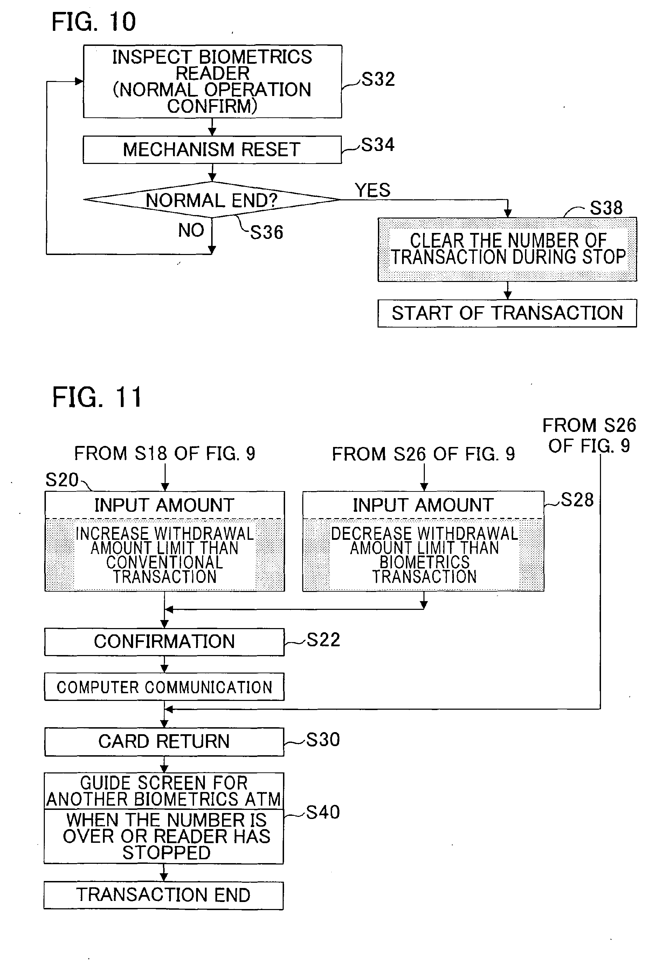

Blood vessel image extraction processing 34 extracts a vein image from the image of the hand when hand outline detection processing 30 judges that an image has been captured with the hand held correctly. That is, as explained in Fig. 10 and Fig. 11, grayscale data of the image of the palm such as that of Fig. 7 is obtained through differences in reflectivity. The vein pattern image is an image like that shown in Fig. 6; the data is grayscale data such as that in Fig. 7.

Registered blood vessel image search processing 46 searches a storage portion (IC chip memory) of the IC card 5 shown in Fig. 3 for three registered blood vessel image data sets R1, R2, R3 corresponding to the individual ID (account number). As shown in Fig. 7, verification processing 44 compares the blood vessel image data N1 detected by the blood vessel image detection processing 34 with the registered blood vessel image data N2 (R1, R2, R3), performs verification processing, and outputs a verification result to the ATM application 68.

In order to install such a biometric authentication system, the biometric reader device (image capture device) 1-1 and the authentication program 69 must be installed in the automated transaction machine 6.

### Automated Transaction Control Processing of a First Embodiment

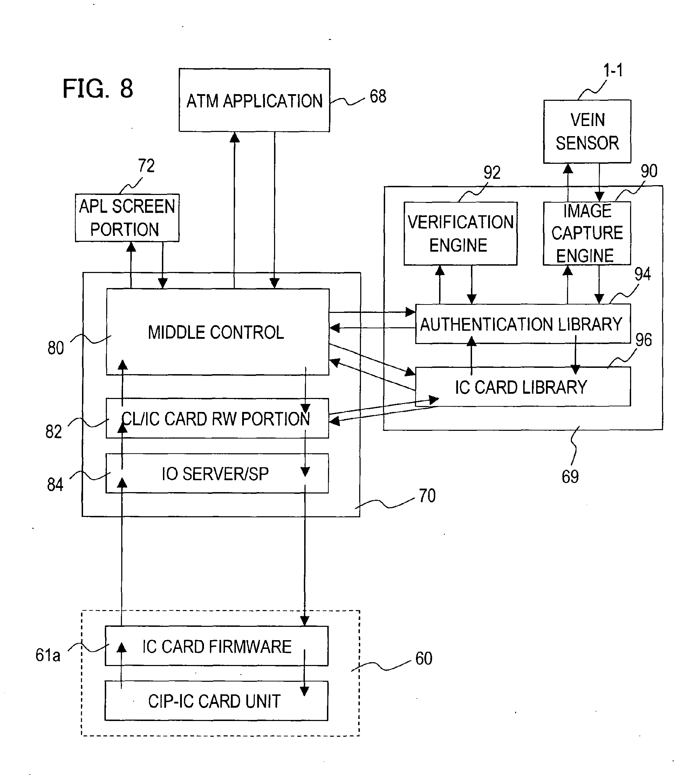

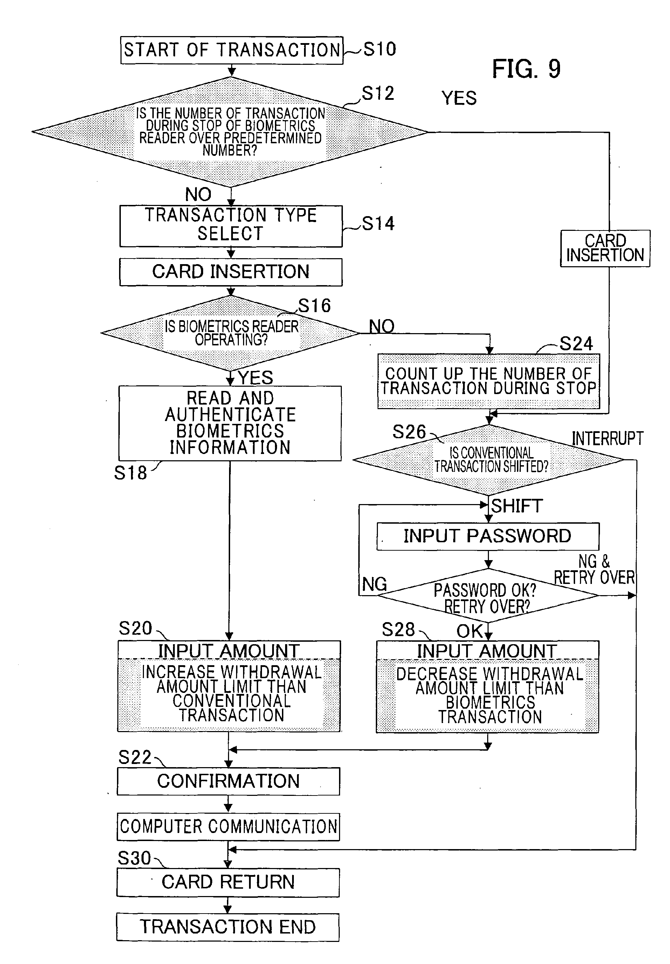

Fig. 8 shows the configuration of an ATM program of one embodiment of the invention, and Fig. 9 shows the transaction processing flow by a program configured as in Fig. 8.

Fig. 8 shows the program configuration of the control unit 67 of the ATM 6 having a vein sensor 1-1 and moreover an authentication program 69 is installed in as shown in Fig. 3. As shown in Fig. 8, middleware programs 70, 72 are positioned between an ATM application 68 which performs transaction processing and the IC card firmware 61a of the IC card reader/writer 60. The middleware program 70 queries the authentication program 69 and determines the automated transaction method in response to the start of a transaction by the ATM application 68.

That is, the middleware program 70 has an IO server/SP portion 84, which functions as a server and supervisor of the IC card firmware program 61a; a CL/IC card RW portion 82, which functions as a client of the IC card reader/writer; and a middle control portion 80, connected to the CL/IC card RW portion, and which initializes the authentication program 69. This middle control portion 80 exchanges data with the ATM application 68, and controls the application screen portion 72.

On the other hand, the authentication program 69 has an IC card library 96, which reads biometric data in the IC card 5 using the IC card reader/writer 61; an image capture engine 90, which controls image capture by the vein sensor 1-1; a verification engine 92, which performs the above-described verification processing 44 of Fig. 4; and an authentication library 94, which causes the IC card reader library 96 to execute the above-described registered blood vessel search processing 46 of Fig. 4, and also causes the image capture engine 90 to execute the above-described distance/hand outline detection processing 30 and blood vessel extraction processing 34 of Fig. 4. This authentication library 94 is initialized by the middle control portion 80, initiates authentication processing, and returns a verification result.

The transaction processing of the first embodiment by the program of Fig. 8 is explained, using the flow diagram of Fig. 9.

(S10) The ATM application 68 detects touching of the screen of the UOP 6-1, and initiates a transaction.

(S12) The ATM application 68 judges whether the number of transactions during stoppage (failure) of the vein sensor (biometric device)1-1 provided within the control unit 67 is equal to or greater than a preset number. For example, the preset number may be five. As explained below, the number of transactions during stoppage of the biometric device 1-1 is the number of times, at the start of a transaction, that the biometric device 1-1 has been judged to be stopped (have failed), due to a hardware error in the biometric device, disconnection of a connection socket, or for some other reason. If the number of transactions during stoppage is equal to or greater than the preset number, a transaction based on biometric authentication is judged to be not possible, the user is prompted to insert a card 5, and processing advances to step S26.

(S14) When the number of transactions during stoppage is not equal to or greater than the preset number, the ATM application 68 displays a transaction type selection screen on the UOP 6-1. The user uses the UOP 6-1 to input the transaction type. The ATM application 68, upon judging that a cash-dispensing transaction (withdrawal, transfer) has been selected, displays a card insertion screen on the UOP 6-1. When the user inserts an IC card 5 into the insertion aperture 6-4, the IC card reader/writer 61 reads the data on the magnetic stripe or IC chip of the IC card 5. This data contains the account number of the user and similar.

(S16) In order to initiate biometric authentication, the ATM application 68 instructs the middle control portion 80 to initiate authentication. As a result, the middle control portion 80 issues an initialization instruction to the authentication library 94 and IC card library 96, to read biometric information and perform authentication. The authentication library 94 and IC card library 96 perform initialization operations for various portions. At this time, the authentication library 94 also performs processing to initialize the vein sensor 1-1. In this initialization processing, a judgment is made as to whether the vein sensor 1-1 can operate. For example, if there is no response even when an initialization command is issued to the vein sensor 1-1, a response is sent to the middle control portion 80 indicating no response. As a result, the middle control portion 80 judges that the vein sensor 1-1 is not in an operating state, and processing advances to step S24.

(S18) On the other hand, when the vein sensor 1-1 is in the operating state, the middle control portion 80 receives the account number read from the IC card by the ATM application 68 from the IC card reader-writer 61 through insertion of the IC card 5, and notifies the IC card library 96. The IC card library 96 reads registered blood vessel image data corresponding to the account number on the IC card 5 from the IC card firmware 61a, via the CL/IC card RW portion 82 and IO server/SP 84 (see Fig. 4). The authentication library 94 which has been started causes the image capture engine 90 to execute the image acquisition operation of the vein sensor 1-1, including the above-described distance/hand outline detection processing 30 and blood vessel image extraction processing 34 of Fig. 4. The authentication library 94 then sends the extracted blood vessel image obtained from image capture by the vein sensor 1-1 and the registered blood vessel image to the verification engine 92, and causes verification processing to be performed. The middle control portion 80 is notified of each of the states of progress of the authentication library 94, and the middle control portion 80 displays the state of progress (reading, verifying, verification result) on the UOP 6-1 by means of the APL screen portion 72. Upon being notified by the authentication library 94 that a verification result is not satisfactory (NG), the middle control portion 80 increments the number of retries by "1". A judgment is then made as to whether the number of retries has exceeded a preset number of retries (for example, three) (retry over). If the number of retries has exceeded the preset number of retries, a transaction based on biometric authentication is judged to be not possible, and processing advances to step S26.

(S20) Upon being informed by the authentication library 94, within the preset number of retries, that the verification result is satisfactory (OK), the middle control portion 80 notifies the ATM application 68 of the normal end of authentication. As a result, the ATM application 68 displays a monetary amount input/confirmation screen on the UOP 6-1 to perform monetary amount input, which is normal transaction processing after authentication. In this case, because security is maintained, the withdrawal amount limit is raised above the withdrawal amount limit for a conventional transaction, described below in step S28. The ATM application 68 checks whether monetary amount input by the user is within the withdrawal amount limit.

(S22) When the user performs an operation to confirm the monetary amount, the ATM application 68 communicates with a computer (the host), and displays a screen to this effect on the UOP 6-1. Processing then advances to step S30.

(S24) If on the other hand the middle control portion 80 judges that there is an abnormality with the vein sensor 1-1 in step S16, the number of transactions during stoppage (failure) of the biometric device in the control unit 67 is incremented.

(S26) In steps S12 and S16, if it is judged that a transaction based on biometric authentication is not possible, a judgment is made as to whether to make a transition to a conventional transaction, based on the user screen selection or on user setting information. In cases where no transition is made, that is, an interruption instruction is issued and set, an interruption screen is displayed on the UOP 6-1 by the APL screen portion 72, and an interruption response is sent to the ATM application 68. The ATM application advances to step S28. If on the other hand an interruption is not instructed and set, the middle control portion 80 responds to the ATM application 68 indicating a conventional transaction. The ATM application 68 performs automated transaction processing based on a conventional password. That is, a password input screen is displayed, a password number is input, the input password number is verified against the password number corresponding to the account number on the IC card 5, and if the verification result is satisfactory, processing advances to step S28. If on the other hand the verification result is not satisfactory, the user is prompted to retry password number input. And if the verification result is not satisfactory even when the number of retries has reached a prescribed number, a screen indicating the transaction is not possible is displayed, and processing advances to step S30.

(S28) The ATM application 68 displays a monetary amount input/confirmation screen on the UOP 6-1 to perform monetary amount input, which is normal transaction processing after authentication. In this case, because the level of security is lower, the withdrawal amount limit is lowered below the withdrawal amount limit for a transaction based on biometric authentication, described above in step S20. The ATM application 68 checks whether monetary amount input by the user is within the withdrawal amount limit. Processing then returns to step S22.

(S30) The monetary amount is input, and if the host response obtained through computer communication is satisfactory, either one of withdrawal, deposit, and fund transfer for the account is performed, and the IC card 5 and a receipt are returned. Then processing ends.

In this way, even when there is an abnormality in the biometric unit in an automated transaction device having biometric authentication functions, a transition is made to a conventional transaction based on password authentication using an IC card. So even in the event of an abnormality in the biometric device, transactions based on other, non-biometric authentication are possible, contributing to improved convenience to the user.

The number of transactions during stoppage of the biometric readout device (image capture device) 1-1 is counted, and if equal to or greater than the preset number, biometric authentication is not started, and a transition is made to a conventional transaction. Hence even if there is a problem in the biometric device, transactions based on conventional authentication are possible until device maintenance staff arrive and restore the device to normal. For example, even in after-hours operation, services provided to customers are not curtailed so drastically, and in maintenance of the equipment, some margin is gained in choosing the time to dispatch device maintenance staff.

Further, the withdrawal amount limit for transactions based on biometric authentication can be increased compared with the withdrawal amount limit for conventional transactions (with authentication using a password), so that withdrawal transactions commensurate with the degree of security are possible. That is, when a biometric authentication is not possible, damages due to illicit acts are reduced even in the case of a conventional transaction.

Moreover, this embodiment is realized through middleware, and so can be realized without altering the conventional ATM application 68.

Fig. 10 shows the flow of maintenance and inspection processing of the biometric device 1-1 related to Fig. 9.

(S32) When maintenance staff maintain and inspect the automated transaction device 6, the error state of the biometric device 1-1 is investigated using the attendant operation portion 65 of the automated transaction device 6, and maintenance and inspections are performed. That is, the cause of the error in the biometric device 1-1 is checked and inspected by the maintenance staff. For example, inspections are performed to determine whether plugs are unplugged, whether the device 1-1 itself is operating properly, and similar. The maintenance staff confirm normal operation. If operation is not normal, the device may be replaced.

(S34) Upon confirming normal operation, the maintenance staff issue an instruction for mechanism reset from the attendant operation portion 65.

(S36) As a result of the mechanism reset instruction, the device operates, and the device is checked for a normal end of operation. If the end of operation is not normal, processing returns to step S32.

(S38) If on the other hand the end of operation is normal, the biometric device 1-1 can function normally, and so the number of transactions during stoppage of the biometric device 1-1 of the control unit 67 is cleared (reset to zero). A transition is then made to the transaction start state.

### Automated Transaction Control Method of a Second Embodiment

Fig. 11 shows the flow of processing of a second embodiment, which is an automated transaction control method of this invention. Similarly to Fig. 9, the program configuration of Fig. 8 is used. This embodiment adds step S40 to the flow of processing of Fig. 9; otherwise, the flow of processing is the same as in Fig. 9. Hence a portion of Fig. 9 is omitted, portions which are the same are assigned the same symbols, and explanations of the same portions are omitted.

(S40) At the time the card is returned in step S30, if the number of transactions during stoppage of the biometric device 1-1 is equal to or greater than the preset number in steps S12 or S16 of Fig. 9, or if the biometric device 1-1 is currently stopped, a screen guiding the user to another automated transaction device comprising a biometric device is displayed on the UOP 6-1. For example, text such as "The biometric device of this machine is currently out of order; your transaction can be performed at another automated transaction machine having a biometric device", or an illustration (indicating the location of the other machine), or similar is displayed.

By this means, even in conventional transactions, or even when a conventional transaction is interrupted, the user is able to understand that the transaction can be performed at another automated transaction device comprising a biometric device, contributing to improved convenience to the user.

### Automated Transaction Control Method of a Third Embodiment

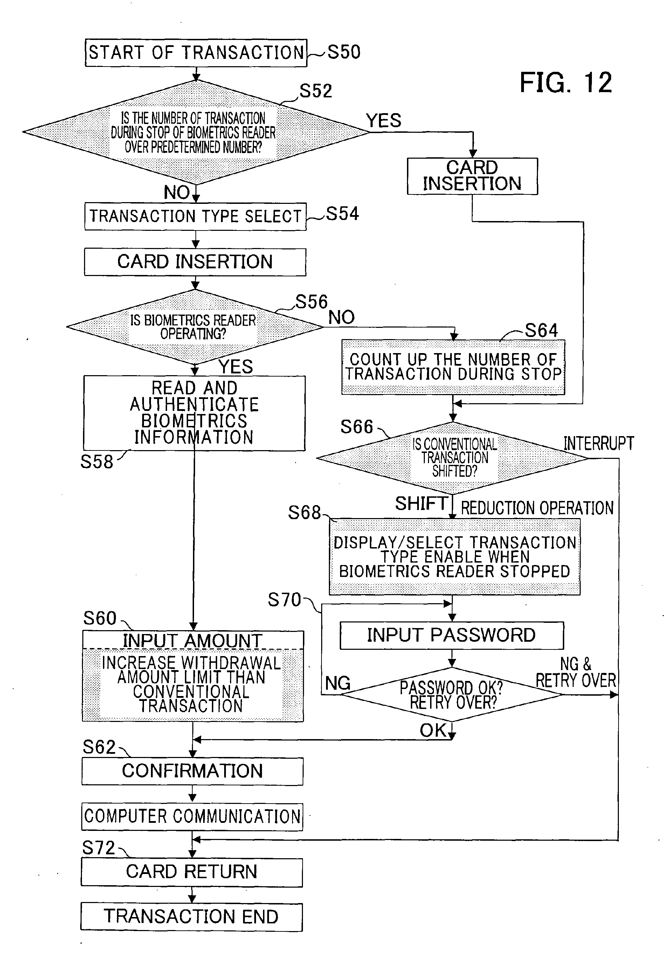

Fig. 12 shows the transaction processing flow by the program configuration of Fig. 8, in a third embodiment of the invention.

(S50) Similarly to step S10, the ATM application 68 detects touching of the screen of the UOP 6-1, and initiates a transaction.

(S52) Similarly to step S12, the ATM application 68 judges whether the number of transactions during stoppage (inoperation) of the biometric device 1-1 provided within the control unit 67 is equal to or greater than a preset number. If the number of transactions during stoppage is equal to or greater than the preset number, a transaction based on biometric authentication is judged to be not possible, the user is prompted to insert a card 5, and processing advances to step S66.

(S54) Similarly to step S14, when the number of transactions during stoppage is not equal to or greater than the preset number, the ATM application 68 displays a transaction type selection screen on the UOP 6-1. The user uses the UOP 6-1 to input the transaction type. The ATM application 68, upon judging that a cash-dispensing transaction (withdrawal, transfer) has been selected, displays a card insertion screen on the UOP 6-1. When the user inserts an IC card 5 into the insertion aperture 6-4, the IC card reader/writer 61 reads the data on the IC chip or magnetic stripe of the IC card 5. This data contains the account number of the user and similar.

(S56) Similarly to step S16, in order to initiate biometric authentication, the ATM application 68 instructs the middle control portion 80 to initiate authentication. As a result, the middle control portion 80 issues an initialization instruction to the authentication library 94 and IC card library 96, to read biometric information and perform authentication. The authentication library 94 and IC card library 96 perform initialization operations for various portions. At this time, the authentication library 94 also performs processing to initialize the vein sensor 1-1. In this initialization processing, a judgment is made as to whether the vein sensor 1-1 can operate. For example, if the sensor does not respond even when an initialization command is issued to the vein sensor 1-1, a message is sent to the middle control portion 80 indicating no response. As a result, the middle control portion 80 judges that the vein sensor 1-1 is not in an operating state, and processing advances to step S64.

(S58) On the other hand, when the vein sensor 1-1 is in the operating state, similarly to step S18, the middle control portion 80 receives the account number read from the magnetic strip or IC chip of the IC card by the ATM application 68 from the IC card reader-writer 61 through insertion of the IC card 5, and notifies the IC card library 96. The IC card library 96 reads registered blood vessel image data corresponding to the account number on the IC card 5 from the IC card firmware 61a, via the CL/IC card RW portion 82 and IO server/SP 84 (see Fig. 4). The authentication library 94 which has been started causes the image capture engine 90 to execute the image acquisition operation of the vein sensor 1-1, including the above-described distance/hand outline detection processing 30 and blood vessel image extraction processing 34 of Fig. 4. The authentication library 94 then sends the extracted blood vessel image obtained from image capture by the vein sensor 1-1 and the registered blood vessel image to the verification engine 92, and causes verification processing to be performed. The middle control portion 80 is notified of each of the states of progress of the authentication library 94, and the middle control portion 80 displays the state of progress (reading, verifying, verification result) on the UOP 6-1 by means of the APL screen portion 72. Upon being notified by the authentication library 94 that a verification result is not satisfactory (NG), the middle control portion 80 increments the number of retries by "1". A judgment is then made as to whether the number of retries has exceeded a preset number of retries (for example, three) (retry over). If the number of retries has exceeded the preset number of retries, a transaction based on biometric authentication is judged to be not possible, and processing advances to step S66.

(S60) Upon being informed by the authentication library 94, within the preset number of retries, that the verification result is satisfactory (OK), the middle control portion 80 notifies the ATM application 68 of the normal end of authentication. As a result, the ATM application 68 displays a monetary amount input/confirmation screen on the UOP 6-1 to perform monetary amount input, which is normal transaction processing after authentication. In this case, because security is high, the withdrawal amount limit is raised above the withdrawal amount limit for a conventional transaction, described below in step S28. The ATM application 68 checks whether monetary amount input by the user is within the withdrawal amount limit.

(S62) When the user performs an operation to confirm the monetary amount, the ATM application 68 communicates with a computer (the host), and displays a screen to this effect on the UOP 6-1. Processing then advances to step S72.

(S64) If on the other hand the middle control portion 80 judges that there is an abnormality with the vein sensor 1-1 in step S56, the number of transactions during stoppage of the biometric device in the control unit 67 is incremented.

(S66) In steps S52 and S56, if it is judged that a transaction based on biometric authentication is not possible, a judgment is made as to whether to make a transition to a conventional transaction, based on the user screen selection or on user setting information. In cases where no transition is made, that is, an interruption instruction is issued and set, an interruption screen is displayed on the UOP 6-1 by the APL screen portion 72, and an interruption response is sent to the ATM application 68. The ATM application advances to step S72 (transaction is terminated).

(S68) If on the other hand an interruption is not instructed and set in step S66, the middle control portion 80 responds to the ATM application 68 indicating a conventional transaction. The ATM application 68 performs degraded automated transaction processing based on a conventional password. Balance confirmation is an example of a degraded automated transaction.

(S70) That is, the password input screen is displayed, the password number is input, the input password number is verified against the password number corresponding to the account number on the IC card 5, and if the verification result is satisfactory, balance confirmation processing is initiated, and processing advances to step S62. If on the other hand the verification result is not satisfactory, the user is prompted to retry password number input, and verification is performed. If the verification result is not satisfactory even when the number of retries reaches a prescribed number, a screen indicating the transaction is not possible is displayed, and processing advances to step S72.

(S72) A monetary amount is input, and if the host response obtained through computer communication is satisfactory, either withdrawal, deposit, or fund transfer for the account is performed, or balance confirmation is performed when executed step S62. The number of authentication NG attempts is written on the IC card 5, and a receipt is returned.

At this time, similarly to Fig. 11, if in steps S52 and S56 the biometric device is stopped, the middle control portion 80 displays on the UOP 6-1 a screen guiding the user to another automated transaction device comprising a biometric device. As a result, the individual can use another machine for automated transactions through biometric authentication.

Thus even when there is a problem with the biometric unit of an automated transaction device having biometric authentication functions, a transition can be made to a conventional transaction based on password authentication using an IC card, so that transactions based on other non-biometric authentication are possible even when there is an abnormality in the biometric device, contributing to improved convenience to the user.

Further, the number of transactions during stoppages of the biometric readout device (image capture device) 1-1 is counted, and if the number equals or exceeds a preset number, a transition is made to a conventional transaction without starting biometric authentication. Hence even if there is a malfunction of the biometric device, transactions based on conventional authentication are possible until maintenance staff for the machine arrive and operation is returned to normal. For example, even in after-hours operation, services provided to customers are not curtailed so drastically, and in maintenance of the equipment, some margin is gained in choosing the time to dispatch device maintenance staff.

Further, compared with transactions based on biometric authentication, the range of conventional transactions (based on authentication using a password) is limited, so that transactions which require authentication according to the level of security are possible. That is, when the result of biometric authentication is NG, damages due to illicit acts are reduced even in the case of a conventional transaction.

Further, this embodiment is realized using middleware, and so there is no need to modify a conventional ATM application 68.

### Other Embodiments

In the above-described aspects, biometric authentication was explained for the case of authentication using vein patterns in the palm of the hand; but application to other biometric authentication, such as vein patterns in the fingers, palm-prints, or other features of the palm of the hand, as well as to fingerprints, facial features, and similar is also possible. Moreover, the case of automated equipment for financial operations was explained, but application to automated ticket issuing equipment, automated vending equipment, and to automated machines and computers in other areas, as well as to door opening/closing equipment in place of keys, and to other equipment where individual authentication is required, is also possible.

Similarly, the middle control portion 80 starts the authentication program 69 and controls biometric authentication and traditional transactions; but execution by the ATM application and an authentication program is also possible.

Moreover, cards are not limited to IC cards, and other storage media may be used; authentication in conventional transactions is not limited to passwords, but can use other non-biometric authentication means such as seals, signatures, or similar.

In the above, embodiments of the invention have been explained; but the invention can be variously modified within the scope of the claims, and these modifications are not excluded from the scope of the invention.

In an automated transaction device having biometric authentication functions, a transition can be made to conventional transactions based on non-biometric authentication using a card held by the user even when there is an abnormality in the biometric unit, so that automated transactions are possible even when there is an abnormality in the biometric unit, contributing to improved convenience for the user.

This enables efficient processing of transactions to be performed, whilst still providing a high degree of security.

## Claims

1. An automated transaction device for performing an automated transaction using biometric authentication or non-biometric authentication of a user, comprising:
a media reading unit for reading a storage medium of said user;
a biometric unit for verifying registered biometric characteristic data of the user against detected biometric characteristic data detected from a body part of said user, and performing individual authentication; and
a control unit for performing an automated transaction according to the authentication result of the individual authentication by said biometric unit; wherein
said control unit is operable to detect, at the start of said automated transaction, whether or not said biometric unit is normally operable, and to effect a transition to non-biometric authentication, in which individual data of the user stored in said recording medium is verified against inputted individual data, when the biometric unit is not normally operable, and to execute an automated transaction when the individual data is successfully authenticated.

2. The automated transaction device according to Claim 1, wherein said control unit causes the conditions of the transaction based on said biometric authentication to be different from the conditions of the transaction based on non-biometric authentication in which verification against said individual data is performed.

3. The automated transaction device according to Claim 1 or 2, wherein said control unit counts the number of transactions performed during abnormal operation of said biometric unit, and when said number of transactions either equals or exceeds a preset number, effects a transition to said non-biometric authentication.

4. The automated transaction device according to Claim 3, wherein, at the time of recovery of normal operation of said biometric unit, said control unit clears said counted number of transactions.

5. The automated transaction device according to Claim 3 or 4, wherein, when said counted number of transactions either equals or exceeds a preset number, said control unit provides guidance to the user for use of another automated transaction device comprising biometric authentication functions, by means of a guidance screen of said automated transaction device.

6. The automated transaction device according to any preceding Claim, wherein said control unit causes a withdrawal amount limit for the transaction based on said biometric authentication to be different from a withdrawal amount limit for the transaction based on non-biometric authentication in which verification of said individual data is performed.

7. The automated transaction device according to any preceding Claim, wherein said control unit limits the range of transactions available based on said non-biometric authentication compared with the range of transactions available based on said biometric authentication.

8. The automated transaction device according to any preceding Claim, wherein said biometric unit comprises:
an image capture device for capturing an image of said body part; and
an authentication unit for extracting said detected biometric characteristic data from said captured image, verifying said biometric characteristic data against said registered biometric characteristic data, and performing individual authentication.

9. The automated transaction device according to any preceding Claim, wherein said control unit has:
a middleware program which, at the time of initiation of a transaction, starts said biometric unit, and based on the result of a response from said biometric unit detects an abnormality in said biometric unit, and executes said non-biometric authentication; and
a transaction processing program which controls an automated transaction mechanism to perform automated transaction operations, according to said authentication result.

10. An automated transaction control method, comprising the steps of:
detecting abnormality of a biometric unit of an automated transaction device;
verifying biometric characteristic data already registered against detected biometric characteristic data detected from a body part of the user using the biometric unit, and performing biometric authentication, when no abnormality of the biometric unit is detected;
executing an automated transaction based on said biometric authentication when the result of said biometric authentication is satisfactory; and
verifying non-biometric individual data of the user stored in said storage medium against non-biometric individual data inputted into the automated transaction device to perform non-biometric authentication of the user, and executing an automated transaction, when an abnormality of said biometric unit is detected.

11. The automated transaction control method according to Claim 10, further comprising a step of causing the conditions of the transaction based on said biometric authentication to be different from the conditions of the transaction based on said non-biometric authentication.

12. The automated transaction control method according to Claim 10 or 11, further comprising the steps of:
counting the number of transactions performed whilst said biometric unit has an abnormality;
judging either whether or not said counted number of transactions exceeds a preset number or equals the preset number; and
effecting a transition to said non-biometric authentication when said counted number of transactions is judged either to exceed the preset number or to equal the preset number.

13. The automated transaction control method according to Claim 12, further comprising a step, at the time of recovery to normal operation of said biometric unit, of clearing said counted number of transactions.

14. The automated transaction control method according to any of Claims 10 to 13, further comprising a step, when there is an abnormality in said biometric unit, of providing guidance to the user for use of another automated transaction device having biometric authentication functions, by means of a guidance screen of said automated transaction device.

15. The automated transaction control method according to Claim 11, wherein said step of causing transaction conditions to be different comprises a step of causing the withdrawal amount limit of the transaction based on said biometric authentication to be different from the withdrawal amount limit of the transaction based on said non-biometric authentication.

16. The automated transaction control method according to Claim 11, wherein said step of causing transaction conditions to be different comprises a step of causing the allowable range of transactions based on said non-biometric authentication to be limited compared with the allowable range of transactions based on said biometric authentication.

17. The automated transaction control method according to any of Claims 10 to 16, wherein said biometric authentication step is executed by an image capture device which captures images of said body part, and by an authentication unit which extracts said detected biometric characteristic data from said captured images, verifies said detected biometric characteristic data against said registered biometric characteristic data, and performs individual authentication.

18. The automated transaction control method according to any of Claims 10 to 17, further comprising:
a step of requesting status from said biometric unit, judging an abnormality in said biometric unit based on the response from said biometric unit, and executing said non-biometric authentication with a middleware program; and
a step of controlling an automated transaction mechanism which performs automated transaction operations, according to said authentication result with a transaction processing program.

19. A computer readable storage medium storing a program containing program code which, when executed by a computer, causes the computer to perform the method of any of Claims 10 to 18.
